# EUROPEAN PATENT APPLICATION

(11) **EP 1 726 375 A1**
(43) Date of publication of application: **29.11.2006**
(21) Application number: 06005448.3
(22) Date of filing: 17.03.2006
(51) Int. Cl.: B21C 19/00, B21C 47/26, B21F 1/04, B23K 9/133, B23K 35/40, B23K 35/02, B23K 101/32

(54) **Method for forming a large diameter weld wire by imparting a desired shape memory on said wire; A packaged supply of wire and a weld wire with such imparted shape memory form**

(30) Priority: 25.05.2005 US 684618 P; 22.11.2005 US 284999
(71) Applicant: LINCOLN GLOBAL, INC., Santa Fe Springs CA 90670 (US)
(72) Inventor: Melfi, Teresa A., Kirtland, Ohio 44094 (US); James, Matthew J., Brunswick, Ohio 44212 (US); Simon, Eric, 76230 Quincampoix (FR); Jany, Michel, 76130 Mont Saint Aignan (FR)
(74) Representative: Schumacher, Horst

(57) **Abstract**

The present application describes large diameter weld wire (210) and methods for forming a large diameter weld wire (201), in which weld wire (210) is formed and a sinusoidal shape memory is imparted on the wire (210) to enhance feedability and ease of withdrawal from a storage spool or container (345).

## Description

### REFERENCE TO RELATED APPLICATION

This application claims priority to and the benefit of U.S. Provisional Patent Application Serial No. 60/684,618, which was filed May 25, 2005, entitled METHOD AND APPARATUS FOR PACKAGING WIRE IN A WIRE CONTAINER, the entirety of which is hereby incorporated by reference.

### FIELD OF THE INVENTION

The present invention relates to welding wire packaging and more particularly to winding or coiling large diameter welding wire into the welding wire container to minimize the twist in the welding wire during unwinding.

### INCORPORATION BY REFERENCE

Welding wire used in high production operations, such as robotic welding stations, is provided in a large package having well over 200 pounds of wire. In some cases, especially with large diameter wire, the container can hold 2,000 pounds of wire. The welding wire, in these packages, is looped into convolutions of wire loops forming a wire coil extending around a central core or a central clearance bore. One such winding technique is shown in Cooper 6,019,303 which discloses a method and apparatus for packing wire in a storage drum and which is incorporated by reference herein as background material showing the same.

In order to achieve a desired flow of welding wire during the unwinding of the container, a cast can be introduced into the welding wire during the winding process. Such a process is shown in Ferguson III 6,708,864 with is also incorporated by reference herein as background material for showing the same.

Another winding technique is shown in Hsu US 2005/0023401. Hsu discloses the use of packing wire in a container using reverse winding. Hsu is incorporated by reference herein as background material for showing the same. Other wire winding techniques are shown in Crum 3,061,229; Kraft et al 2,959,279; Lorenz 3,120,931; Wilhelm 2,722,729; Kitselman 3,235,202; Tillou II 3,270,977; Kitselman 3,362,654; and Cole et al 3,445,077, all of which are incorporated by reference herein as background material for showing the same.

In addition to winding the wire into the container, the process of winding can further include modifying the shape of the wire such as straitening the wire or producing a natural cast or cant in the wire. Reynolds 3,748,435 discloses controlling the wire attitude and is incorporated by reference herein as background material for showing the same. Eisinger discloses a roller mechanism for forming helical shapes in the wire and is incorporated by reference herein as background material for showing the same. Labbe 4,464,919 and Lefever 3,595,277 disclose rollers used for wire straitening and are incorporated by reference herein as background material for showing the same. Corbin 4,949,567 discloses an apparatus for controlling the wire cast and helix and is incorporated by reference herein as background material for showing the same. Field 3,565,129 and Asbeck et al 3,724,249 disclose systems for forming or crimping wire and are incorporated by reference herein as background material for showing the same. Pfund 3,185,185 also discloses an apparatus for wire shaping that utilizes rollers and is incorporated by reference herein as background material for showing the same. Offer 6,301,944 discloses utilizing dies to control the shape of the wire and is incorporated by reference herein as background material for showing the same. Minehisa et al discloses shaping the wire as it is directed to the welding torch and is incorporated by reference herein as background material for showing the same.

As can be appreciated, any winding technique for welding wire must allow the wire in the container to be used with the wire feeder and, therefore, the wire wound into the container can be designed to work with existing unwinding mechanisms such that an uninterrupted flow of welding wire to the welding operation is achieved. To control the transportation and payout of the wire, an upper retainer or braking device, such as a braking ring, can be used to help control the unwinding of the wire from the wire coil. One such package is shown in Cooper 5,819,934 which discloses a welding wire drum that utilizes a braking ring to control the unwinding of the welding wire from the wire coil. Cooper 5,819,934 is also incorporated by reference herein as background material showing the same. Another such packaging is shown in Chung 5,746,380 which also discloses a welding wire drum, however, Chung discloses a different wire flow controlling apparatus for controlling the payout of the welding wire from the drum. Chung is also incorporated by reference herein for showing the same.

### BACKGROUND OF THE INVENTION

In the welding industry, it is important to provide a reliable way to draw welding wire from a package as a continuous supply of wire to perform successive welding operations. Many techniques have been designed over the years to wind the welding wire into a package and then to unwind the same package to feed a welding operation. The advent of mass use of electric welding, such as in robotic welding, has created a need for larger packages for containing and dispensing large quantities of welding wire. However, as can be appreciated, the size of the welding wire and the consumption rate of the welding operation can influence the desired size of the welding wire packages. This is especially true with large diameter welding wire. As can be also appreciated, larger diameter welding wires will necessitate larger packages to hold the same length of welding wire as smaller diameter wires.

Further, in order to work in connection with the wire feeder of the welder, the welding wire must be dispensed in a non-twisted, non-distorted and non-canted condition which produces a more uniform weld without human attention. It is well known that wire has a tendency to seek a predetermined natural condition which can adversely affect the welding process. Accordingly, the wire must be sufficiently controlled by the interaction between the welding wire package and the wire feeder. To help in this respect, the manufacturers of welding wire have produced wire having a natural cast wherein, if a segment of the wire was laid on the floor, the natural shape of the wire would be formed. In many instances, the desired natural cast is essentially a straight line; however, in order to package large quantities of the wire, the wire is coiled into the package which can produce a significant amount of wire distortion and tangling as the wire is dispensed from the package. However, it has been found that the unwinding of the wire from the wire coil is different for different diameter wire. Small diameter welding wires can be easier to control during the unwinding than larger diameter wires.

With current winding and unwinding techniques, the welding wire container must be rotated during the unwinding of large diameter wire from the container to prevent the wire from twisting as it exits the wire container. As can be appreciated, providing a mechanism that can rotate a large welding wire package, with a desired degree of control, can be costly and can consume a significant amount of floor space. However, the cost associated with the rotation of the container during the unwinding of the wire is less than the cost associated with the repeated down-time of the welding operation due to wire tangling.

### SUMMARY OF INVENTION

In accordance with the present invention, provided is an improved method and apparatus of densely packing large diameter welding wire in a storage container, which overcomes the disadvantages of the prior art method and apparatus arrangements and allows the wire to be dispensed in a non-distorted and non-tangled manner.

More particularly, the invention of this application relates to producing a "shape memory" in the wire before and/or during the winding of the wire into the wire coil in the wire container or package. The shape memory is used to package large diameter welding wire, having a diameter of about 0.070 inches or more, such that it is more densely packed in the container, without affecting the ability to smoothly withdraw Welding wire during automatic or semi-automatic welding processes. Further, by using the method and/or apparatus of this application, a wire package can be produced that contains a large diameter welding wire and does not need to be rotated during the unwinding of the welding wire from the package.

According to one aspect of the present invention, the winding of the wire coil includes an apparatus that can have a capstan for pulling the welding wire from the manufacturing process, a rotatable laying head upon a first axis for receiving the wire from the capstan, and a turntable which supports a welding wire storage drum or package. The welding wire can be packaged within the storage drum by rotating the laying head at a first rotational velocity and rotating the capstan at a second rotational velocity in order to determine the loop diameter. Generally, for each loop of welding wire placed within the storage drum, the turntable rotates a fraction of one revolution, thus causing only a small portion of the circumference of the loop to contact the inner surface of the storage drum. An indexing apparatus allows the storage drum and rotatable laying head to be moved relative to the other in sequential steps during loading of the wire within the storage drum.

In accordance with another aspect of the present invention, the winding apparatus includes a mechanism to produce a shape memory in the welding wire that is at least partially maintained even after the wire is wound into the coil.

In accordance with yet another aspect of the present invention, provided is a weld wire with a predefined shape memory imparted onto the welding wire prior to the welding wire being wound onto a reel, spool, container, or the like. The shape memory of the weld wire is again fully or partially retained by the weld wire as the weld wire is wound and unwound from the container and as the weld wire is fed through a welding machine.

In accordance with another aspect of the invention, provided is a packaged supply of large diameter weld wire, with a spool or container and a length of welding wire wound on or in the spool or container. The wire has a desired shape memory substantially lying in a single plane when removed the spool or container, where the shape memory is generally a repeating sinusoidal waveform with a wavelength and a height for each waveform cycle. In one example, the wire has a diameter of about 0.079 to 0.190 inches, with the shape memory being a substantially sinusoidal repeating waveform having a wavelength and a height for each waveform cycle.

In accordance with still another aspect of the invention, a weld wire is provided for storage on or in a spool or container, where the wire includes a desired shape memory comprising a substantially sinusoidal repeating waveform having a wavelength and a height for each waveform cycle.

In accordance with another aspect of the invention, methods are provided for forming a large diameter weld wire for storage on a spool. The methods include forming a weld wire having a diameter of about 0.079 to 0.190 inches, and imparting a desired shape memory on the wire, which shape memory lies substantially in a single plane, wherein the shape memory is generally a repeating waveform, such as a sine wave, having a wavelength and a height for each waveform cycle.

The shape memory on the weld wire can be formed from a variety of processes such as, but not limited to, forming the wire as it is being wound into the welding wire container. The shape memory imparted onto the weld wire can occur during the formation of the weld wire and/or by a process subsequent to the formation of the weld wire.

As a result of the shape memory, the large diameter welding wire can be unwound from the packaged coil of wire without the need to rotate the container during the unwinding of large diameter wires. Further, the unwinding advantages described above can also be achieved without adversely affecting the weld bead formed by the wire produced according to the present invention.

### BRIEF DESCRIPTION OF THE DRAWINGS

The foregoing, and more, will in part be obvious and in part be pointed out more fully hereinafter in conjunction with a written description of preferred embodiments of the present invention illustrated in the accompanying drawings in which:
FIGURE 1 is an elevation view illustrating a portion of the packaging system according to the present invention;
FIGURE 2A is an elevation view showing the bottom half of FIGURE 1;
FIGURE 2B is an elevation view showing the top half of FIGURE 1;
FIGURE 3 is a plan view taking along line 3-3 of FIGURE 2A;
FIGURE 4 is an elevation view of the turntable system taken along line 4-4 of FIGURE 2A;
FIGURE 5 is a schematic view of a winding operation according to the present invention;
FIGURE 6 is chart including a mean measurement of the shape memory in the welding wire formed according to the present invention;
FIGURE 7 is illustrates the waveform of the shape memory in the weld wire of the present invention;
FIGURE 8 is a cross-sectional view of the shape memory in the weld wire along lines 8-8 of FIGURE 7;
FIGURE 9 is an elevation view illustrating another exemplary turntable system taken along line 4-4 of FIGURE 2A;
FIGURE 10 is a plan view illustrating further details of the turntable system of FIGURE 9;
FIGURE 11A is a top plan view in section taken along line 11-11 in FIGURE 7 illustrating a solid submerged arc welding (SAW) electrode that may be manufactured and packaged in accordance with the invention; and
FIGURE 11 B is a top plan view in section taken along line 11-11 in FIGURE 7 illustrating a cored submerged arc welding electrode in accordance with the invention.

### DETAILED DESCRIPTION OF THE INVENTION

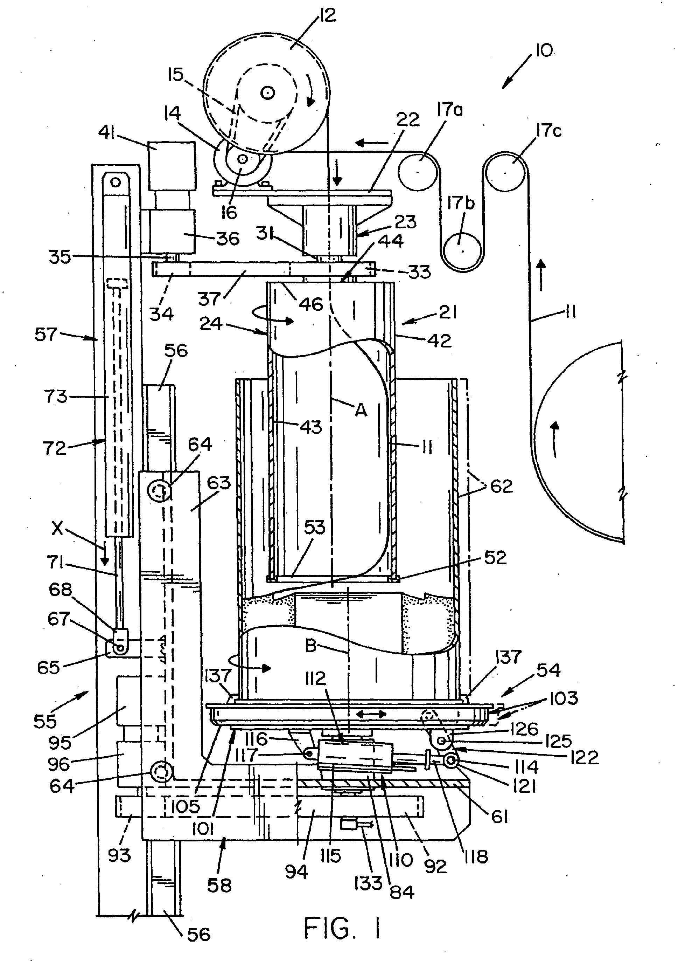

Referring to the drawings, wherein the showings are for the purpose of illustrating the invention only and not for the purpose of limiting same, FIGURES 1-4 provide background showing a winding operations which can be utilized in relation to the invention of this application. However, it must be noted that while one particular winding arrangement is shown, it should be appreciated that the components described below can be replaced with equivalent components known in the art. Further other winding arrangements could be utilized.

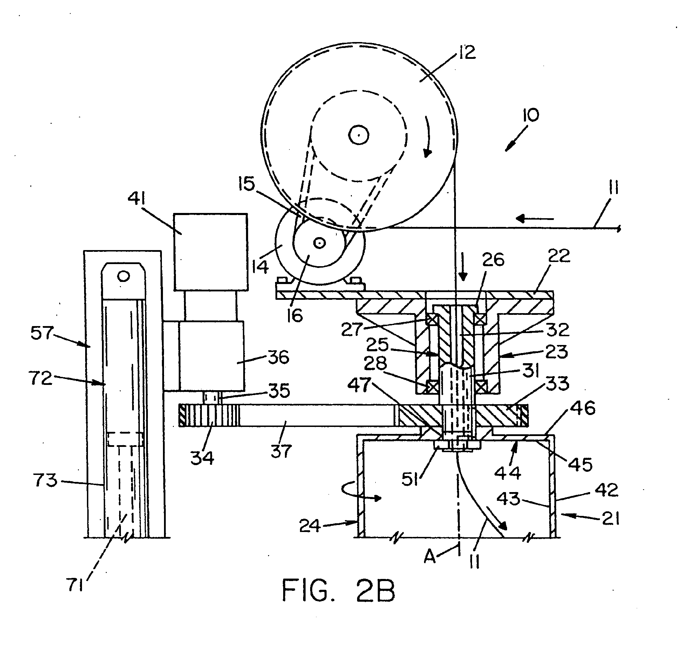

More particularly, shown is a drum winding system 10 which draws a continuous welding wire 11 from a manufacturing process (not shown). Welding wire 11 is a large diameter welding wire having a diameter greater than about 0.070 inches, such as approximately equal to 3/32 inches to 3/16 inches. Wire 11 can be drawn by a capstan 12 driven by a wire feed motor 14 connected to a pulley 16 which drives a belt 15. As can be seen, the wire is drawn over a series of rolls and dancer rolls 17a, 17b and 17c which serve to maintain tension to welding wire 11 between the manufacturing process and capstan 12. As can be seen from FIGURES 1 and 2B, welding wire 11 is wrapped about 270 degrees about capstan 12. This can be used to provide the proper friction and drive capacity to draw welding wire 11 across the dancer rolls 17a-17c. Welding wire 11 can then be fed into a rotatable laying head 21 which is suspended from a winding beam 22. Rotatable laying head 21 rotates within a bearing housing 23 which is suspended from winding beam 22. Rotatable laying head 21 can include a laying tube 24 and a journal portion 25 extending therefrom and supported for rotation by a flange 26 and a top and a bottom bearing 27 and 28 located at the top and bottom ends, respectively, of bearing housing 23. It will be appreciated that journal portion 25 includes both an outer cylindrical surface 31 for contact with bearings 27 and 28 and an inner cylindrical surface 32 defining a hollow shaft interiorwhich allows welding wire 11 to pass from capstan 12 to laying tube 24.

A pulley 33 can be keyed into the outer cylindrical surface 31 of journal portion 25 below bearing housing 23. A corresponding pulley 34 extends from a shaft 35 of a layer drive motor 36. A belt 37 connects pulleys 33 and 34 in order that layer drive motor 36 drives journal portion 25 and correspondingly drives rotatable laying head 21.

A control panel 41 can be used to direct the speed of layer drive motor 36 and wire feed motor 14 as well as coordinating the ratio between the speeds of the two motors. The motor speed affects the rotational velocity of laying head 21 and the rotational velocity of capstan 12. It will be appreciated that the ratio between the laying head rotational velocity and the capstan rotational velocity can be used to control determines a loop size diameter of welding wire 11 in the container.

Laying tube 24 includes an outer cylindrical surface 42, an inner cylindrical surface 43, and a generally closed upper end 44 having inner and outer surfaces 45 and 46, respectively. A small hole 47 centered about a centerline axis A of laying tube 24 extends between inner surface 45 and outer surface 46. The lower end of journal portion 25 extends through small hole 47, and is supported by a small flange 51 at the extreme lower end of journal portion 25 and tack welded in place. The bottom end of laying tube 24 includes a ring 52 extending about the circumference of the lower end of laying tube 24. Ring 52 has an opening 53 through which welding wire 11 passes from laying tube 24 during the packing operation.

A turntable 54 is supported for rotation on a turntable support 55. Turntable support 55 includes a guide track 56, a force cylinder 57, and an L-shaped beam portion 58. As mentioned above, turntable support 55 allows rotation of turntable 54 thereupon, and specifically upon a horizontal beam 61 of L-shaped beam portion 58. It will be appreciated that as the weight of welding wire 11 is placed within storage drum 62, a vertical beam portion 63, which is attached to the rubber guide wheels 64, rides downward on guide track 56, which is shown as an H-beam. Thus, L-shaped beam portion 58 rides downward on guide track 56 while storage drum 62 is filled.

Vertical beam portion 63 includes a finger 65 which extends outwardly therefrom and is pivotally attached at pin 67 to an outward end 68 of a rod 71 which is part of a pressurized cylinder assembly 72. Pressurized cylinder assembly 72 includes a pressurized cylinder 73. It will be appreciated that cylinder 73 is pressurized such that when storage drum 62 is empty, cylinder 73 is at equilibrium and L-shaped beam portion 58 is at its highest point on guide track 56. As storage drum 62 is filled with welding wire 11, the additional weight placed on turntable 54 causes piston rod 71 to extend downward as shown by arrow X in a controlled descent down guide track 56. The pressure within cylinder 73 is based upon a predetermined weight to pressure ratio. The controlled descent allows welding wire 11 to be placed within storage drum 62 from the bottom of storage drum 62 adjacent turntable 54 to the top lip of storage drum 62. Thus, in one embodiment, rotatable laying head 21 does not move in a vertical direction but instead turntable 54 moves in the vertical direction which is parallel to the centerline axis A of laying tube 24.

Turntable 54 can be driven for rotation in a manner similar to laying tube 24. A bearing housing 84 is mounted on horizontal beam 61 of L-shaped beam portion 58. A journal portion 85 extends downwardly from turntable 54 and is allowed to freely rotate by means of the bearings 86 and 87. Journal portion 85 can be a cylinder which has an outer cylindrical surface 88 and an inner cylindrical surface 89. A cogbelt pulley 92 can be keyed to the bottom end of journal portion 85. Cogbelt pulley 92 is connected to cogbelt pulley 93 by a belt 94. Cogbelt pulley 93 is driven by a turntable motor 95 through a gearbox 96. Turntable motor 95 is geared down substantially from laying tube 24 in order than turntable 54 only rotates one fraction of a single revolution relative to a full revolution of laying tube 24.

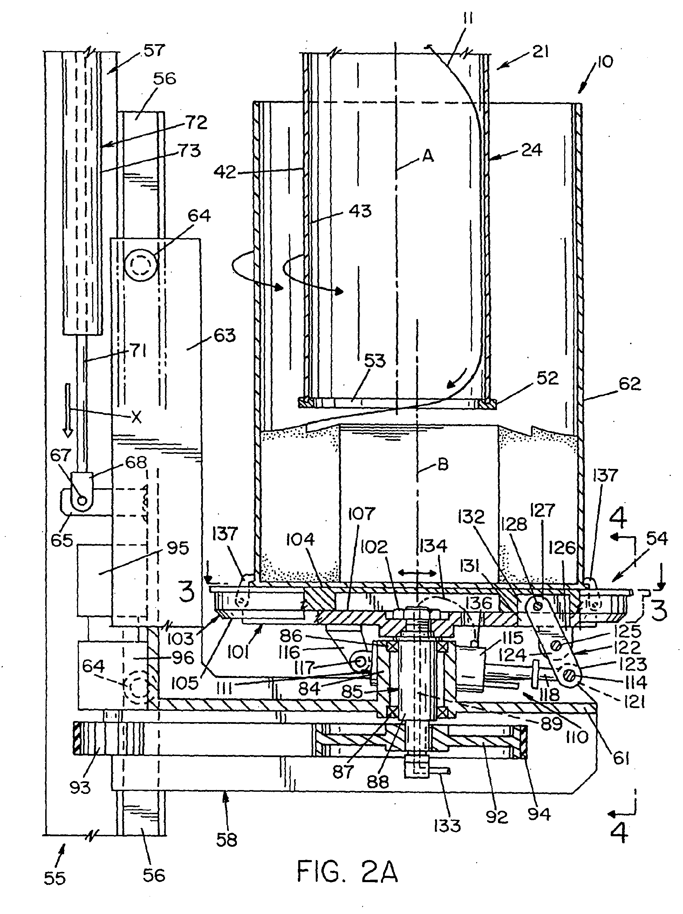

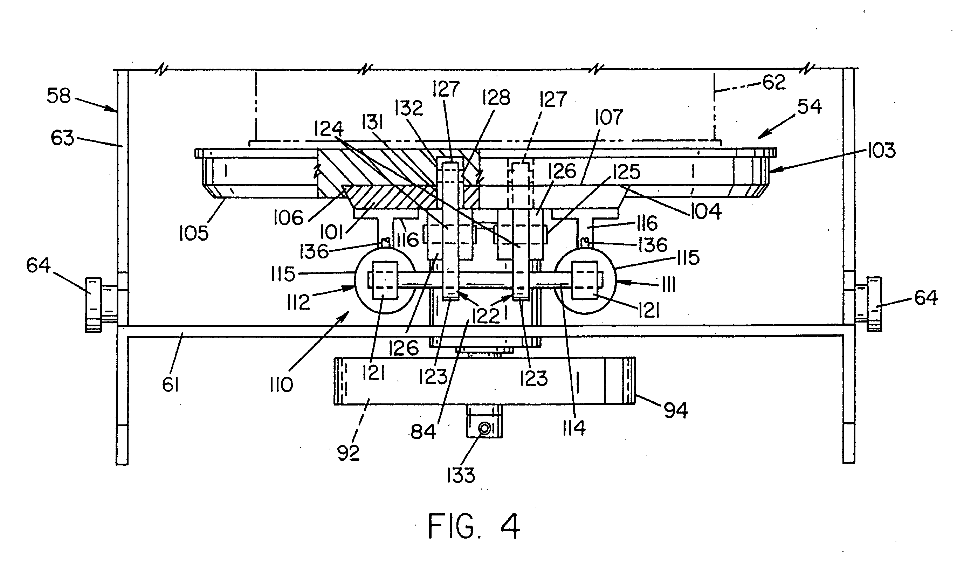

As can be best seen from FIGURE 2A, FIGURE 3 and FIGURE 4, turntable 54 includes a bottom platform 101 which is driven for rotation by a top end key assembly 102 of journal portion 85. As best seen in FIGURE 4, a slide table 103 is mounted on bottom platform 101 of turntable 54 by way of a large keyway 104 cut into the bottom end 105 of slide table 103. A key 106 of bottom platform 101 retains slide table 103. Slide table 103 is capable of movement relative to bottom platform 101 by the sliding of keyway 104 on key 106. It will be appreciated that key 106 and keyway 104 can be coated with a relatively frictionless surface such as nylon or the like. Additionally, the bearing surface 107 of key 106 can be provided with a track and ball bearings or other type of bearings (not shown) which facilitates ease of movement between slide table 103 and bottom platform 101.

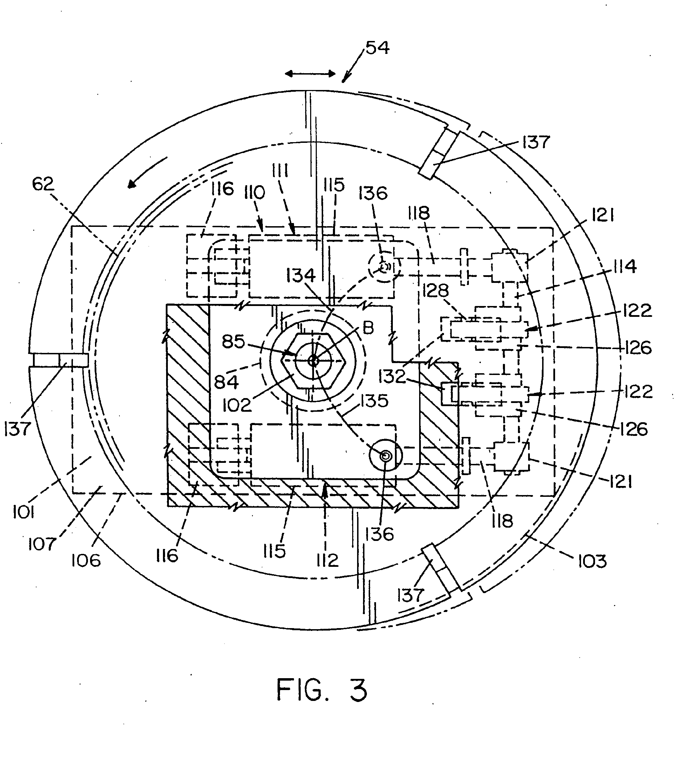

Movement of slide table 103 is caused by an indexer working in conjunction with slide table 103. Preferably, the indexer is a piston and cylinder assembly 110 which depends downwardly from turntable 54. Piston and cylinder assembly 110 includes two generally identical rod and pistons 111 and 112, respectively, which are commonly connected by a drive rod 114. Each of rod and pistons 111 and 112 are spaced apart an equal distance from journal portion 85 of turntable 54, and generally parallel to the direction of movement between key 106 and keyway 104 as shown in FIGURE 3.

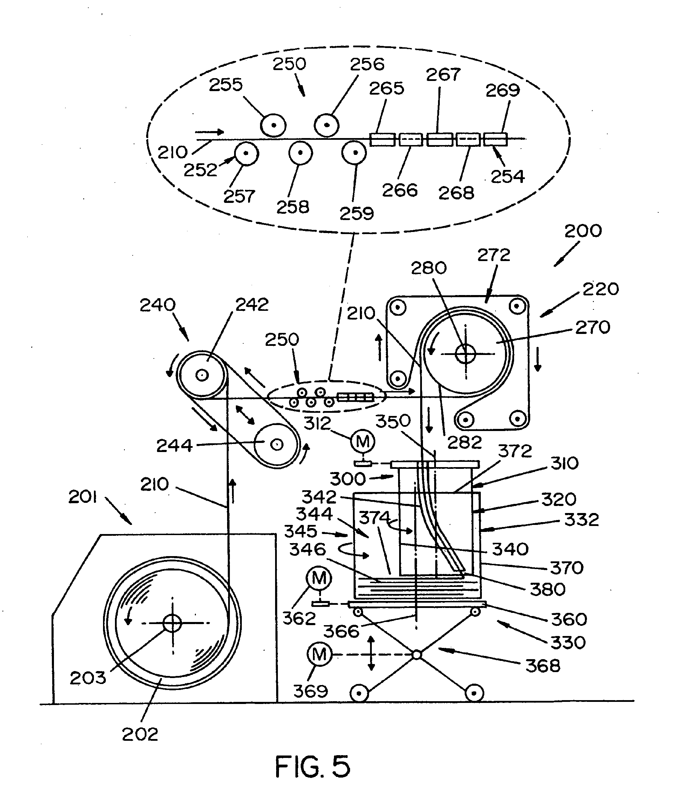

Rod and piston 111 can be identical and are, therefore, numbered identically in the drawings. Rod and piston 111 includes piston portion 115 pivotally attached to bracket 116 which extends downwardly from bottom platform 101, by a pivot pin 117. Rod portion 118 extends from the opposite end of piston portion 115 to a block 121 which retains drive rod 114 therein. In turn, drive rod 114 extends generally perpendicular to rod portion 118 and is connected to identical block 121 extending from rod and piston 112. Between blocks 121, drive rod 114 is connected to a lever 122 at the lever lower end 123. At a middle portion 124 of lever 122, lever 122 is pivotally connected by a pin 125 to a bracket 126 extending from the bottom end of bottom platform 101. At an upper end portion 127 of lever 122, lever 122 is pivotally connected to slide table 103 by a pin 128. As can be best seen in FIGURE 4, lever 122 is permitted to extend through bottom platform 101 to slide table 103 through aligned slots 131 and 132 in each of bottom platform 101 and slide table 103, respectively. Rod and pistons 111 and 112 are each driven equally by air. An air supply (not shown) is connected to air supply tube 133 at the bottom of journal portion 85. The inner cylinder surface 89 serves as an air passageway through which air supply is fed upwards to air supply hoses 134 and 135 (seen in FIGURE 3) which are then connected to cylinder inlet 136. With the above arrangement, it will be appreciated that an air supply is capable of driving rod portion 118 of rod and pistons 111 and 112, which in turn drives lever 122 to move slide table 103 and keyway 104 in a horizontal direction relative to key 106 and bottom platform 101. The arrangement accomplishes this sliding movement without affecting the ability of turntable 54 and bottom platform 101 to rotate. A fully packed storage drum 62 is shown in FIGURE 5.

The winding apparatus thus allows a storage drum 62 mounted on turntable 54 and specifically mounted with the clips 137 to slide table 103 be filled in a high density manner. As can be seen, welding wire 11 is placed within storage drum 62 by rotation of laying tube 24 about axis A. It will be appreciated that laying tube axis A is offset from the centerline axis B of storage drum 62.

The winding mechanism 10 described above can be used to wind welding wire into a storage container or package. Further, winding mechanism 10 can be adapted to wind large diameter wire such that the wire has a desired shape memory, which will be described in greater detail below, to prevent tangling of the welding wire during the unwinding of the wire from the container. Again, as is discusses above, while it has been found that shape memory can be used to improve weldability, it has been found that shape memory can also be used to improve the unwinding of the welding wire from the container and to eliminate the need to rotate the container during the unwinding of the wire from the container.

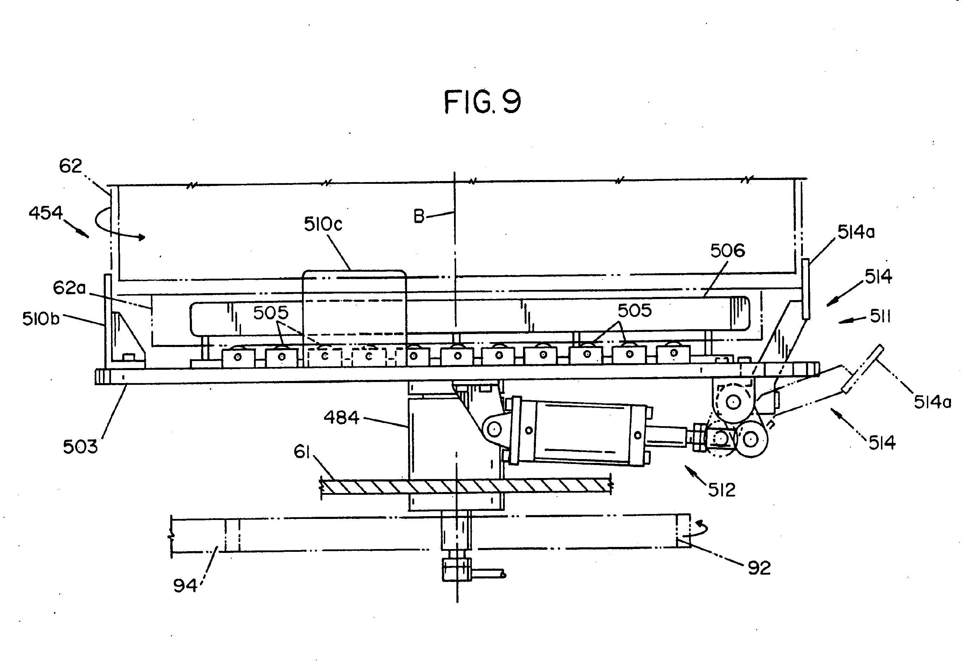

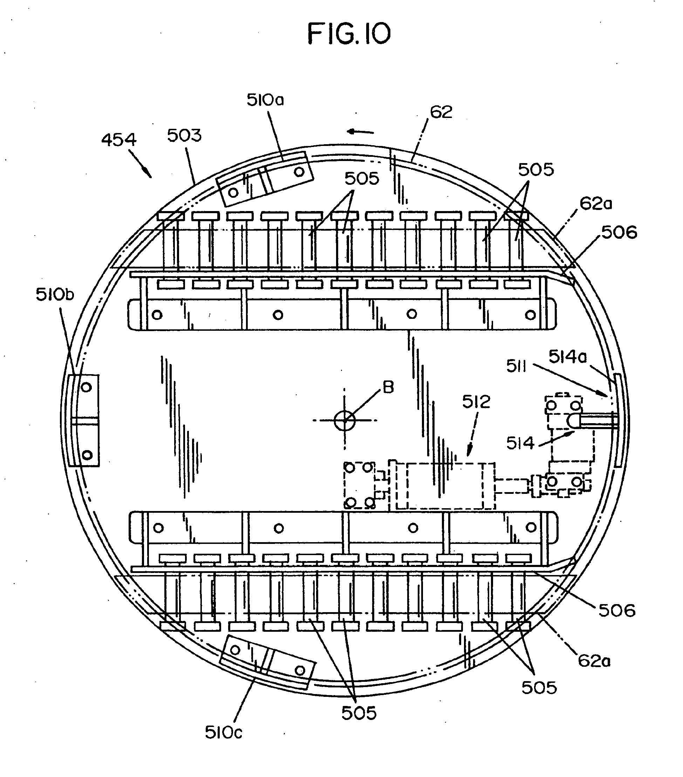

Referring also to FIGURES 9 and 10, another exemplary turntable system 454 that may be employed in the winding mechanism 10 of FIGURES 1-4 generally described above. Turntable 454 is supported for rotation on turntable support 55 (FIGURES 1 and 2A above) allowing rotation of turntable 454 thereupon, with the drum 62 riding downward on guide track 56 as storage drum 62 is filled. As with turntable 54 described above, turntable 454 is driven for rotation in a manner similar to laying tube 24 *via* a bearing housing 484 mounted on horizontal beam 61 winding mechanism 10, with suitable connections of an internal journal portion (not shown) operatively coupled with a cogbelt pulley (e.g., pulley 92 as in FIGURES 1 and 2A above) for motor driven rotation of turntable 454 about axis B, wherein turntable 454 may be driven such that turntable 454 rotates only a fraction of a single revolution relative to a full revolution of laying tube 24 in one example. Turntable 454 includes a table 503 with two sets of cylindrical rollers or supports 505 mounted on a top surface thereof to allow providing horizontally slidable vertical support for drum 62, either directly or with a drum skid structure 62a having a lower surface riding on the rollers 505. Turntable 454, moreover, may include apparatus for horizontal translation of drum 62 relative to axis A of tube 24 (FIGURES 1 and 2A), such as a bottom platform 101 slidably mounted to table 503 and a suitable piston and cylinder assembly (e.g., assembly 110 above) or other suitable means adapted to horizontally translate drum 62 (and hence axis B thereof) relative to the axis A of the tube 24 in a controlled fashion. Alternatively, as shown in FIGURES 9 and 10, drum 62 and table 503 may remain laterally stationary (e.g., with axis A and axis B being a constant distance from one another), with the table 503 being rotated about axis B. Turntable 454 also includes a set of positioner members 510a-510c mounted to and extending upwardly from table 503 to facilitate repeatable location of drum 62 relative to the rotational axis B of turntable system 454. In this regard, drum 62 may be loaded from side 511 of turntable system 454 (the right side in FIGURES 9 and 10), for example, using a forklift or other means, with drum 62/skid 62a being slid laterally on rollers 505 to engage members 510, wherein the exemplary turntable system 454 further includes a piston and cylinder assembly 512 mounted to the bottom surface of table 503 and operably connected to drive a movable clamping apparatus 514 between a first position (shown in phantom in FIGURE 9) and a second position in which drum 62 is clamped in a fixed position between a holding member 514a of claming apparatus 514 and one or more of the positioner members 510.

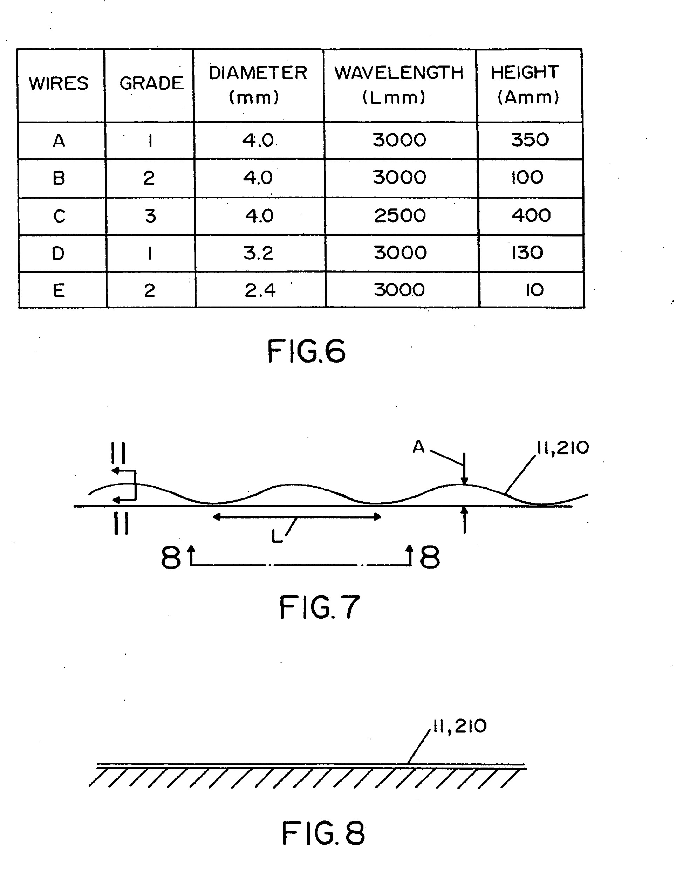

Referring now to FIGURES 6-8, 11A, and 11 B, welding wire 11, 210 is shown in FIGURES 6-8 with a desired shape memory dependent on the properties of the wire and the diameter of the wire. In this respect, shown are five wires A-E. These wires represent wires of three different wire diameters and three different grades. More particularly, wire A is a first grade that is a low carbon, medium manganese, medium silicon general purpose submerged arc wire and has a diameter of 4 mm. LINCOLN ELECTRIC sells this wire under the trademark L-61. Wire B is also a 4 mm diameter but is a different grade wire. LINCOLN ELECTRIC sells this wire under the trademark LNS140TB. Wire C is a 4 mm diameter wire and is a third grade wire that is a low carbon, low manganese, low silicon general purpose submerged arc wire. LINCOLN ELECTRIC sells this wire under the trademark L-60. Wire D is a 3.2 mm diameter wire made from the first grade wire described above. Wire E is a 2.4 mm diameter wire made from the second grade wire describe above. The chart shown in FIGURE 6 further includes a preferred or mean wave length L of the shape memory along with a mean height A of the shape memory. While the preferred dimensions are shown, it should be appreciated that the wave length and height can deviate along the length of the wire. Further, the mean itself can deviate without detracting from the invention of this application. While the listed mean may be the preferred sine configuration, the exact mean or preferred dimension of the sine configuration according to the present invention do not need to be produced or achieved. In this respect, these dimensions can deviate in the range of +/- 50% +/- 35%; +/- 25%; +/- 15%; +/- 10%; +/- 5% or +/-3%. Further this deviation can change along the length of the wire.

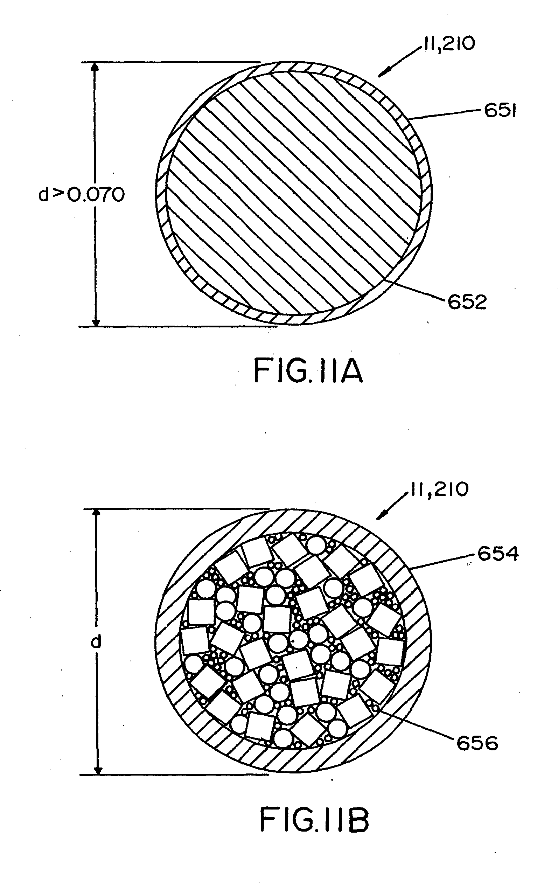

FIGURES 11 A and 11B illustrate two exemplary welding electrode wires 11, 210 in section taken along line 11-11 in FIGURE 7 having diameters "d" greater than about 0.070 inches, wherein the wire 11, 210 of FIGURE 11A is a solid submerged arc welding (SAW) electrode that may be manufactured and packaged in accordance with the invention, and the wire 11, 210 of FIGURE 11 B is a cored submerged arc welding electrode in accordance with the invention. The solid wire electrode 11, 210 of FIGURE 11A includes a solid electrode material 652, and may also include an outer coating 651. The exemplary cored type electrode 11, 210 of FIGURE 11B has a metallic outer sheath 654 surrounding an inner core 656, where the core 656 may include granular flux material for providing a shielding gas and protective liquid (e.g., slag) to protect a molten weld pool during welding, and/or may comprise alloying materials to set the material composition of the weld joint material.

As can also be appreciated, while metric wires are shown in the example, the invention of this application is not limited to metric wires. Further, it has been found that the shape memory of this application can be utilized to allow welding wire having diameters as large as .0.079 inches to 0.190 inches to be unwound from a wire container without the need to rotate the container during the unwinding of the wire. Further, while this method has been found to be of particular effectiveness for this range, the invention of this application should not be limited to this range.

By including a shape memory which includes this sine-like wave, it has been found that large diameter wires can be unwound from a wire coil in a wire package or container without the need to rotate the package during the unwinding. Further, it has been found that the wire is unwound in a tangle free manner when the sine-like wave form is produced in the welding wire either during the winding process or before the winding process including, but not limited to, during the production of the welding wire.

In one embodiment, the above-described shape memory is formed during the winding process, namely, during the winding of the coil in the wire container that is used by the end user. In this respect and with reference to FIGURE 5, shown is a winding apparatus 200 that can be used to produce the desired sine wave. Apparatus 200 includes a de-spooler 201 having a supply of welding wire supply 202 wherein a large diameter wire 210 is drawn from wire supply 202 and the sine-like shape memory is formed before the wire is wound into the container. Wire supply 202 rotates about a supply axis 203 and wire 210 is directed toward a dancer 240. In this respect, dancer 240 functions to maintain a desired tension in wire 210 as it moves through apparatus 200.

Dancer 240 includes two dancer rolls 242 and 244 and can be any dancer known in the art including a dancer with a different number of rollers including, but not limited to, three rollers. With respect to apparatus 200 and dancer 240, roller 242 is a fixed roller and roller 242 is configured to move relative to roller 242 to maintain the desired tension in wire 210 while in apparatus 200. This movement of roller 242 can be by any known method in the art.

As wire 210 exits dancer 240, it is directed toward a straightener 250 that can be used to remove any undesirable shape memory in wire 210. As can be appreciated, wire 210 can have unwanted shape memory formed in the wire during the wire manufacturing process and/or during the wire storage on wire supply reel 202 or even as it passes through dancer 240. In essence, straightener 250 acts to straighten welding wire 210 after it is removed from the wire supply to, in effect, "kill" any prior cast, helix or pitch in the wire pulled from wire supply 202. Straightener 250 can include two sets of rollers 252 and 254. Roller set 252 can have five killing rolls 255 - 259 and roller set 254 can have five killing rolls 265 - 269. However, straightener 250 can be any know straightener in the art.

After wire 210 exits straightener 250, it is directed toward a capstan 220 which creates the driving force to propel the wire through apparatus 200 and into the container. As with other aspects of apparatus 200, the arrangements used for directing the wire from one mechanism to another can be any know arrangement and, therefore, additional details are not including in this application in that they are known in the art. Capstan 220 includes a capstan roller 270 and can include a capstan guard 272. The wire travels about capstan roller approximately 270 degrees coaxial with a capstan axis 280. The wire is in contact with a peripheral capstan edge 282 of capstan roller 270. The wire is then directed toward a cylinder assembly 300 which will be discussed in greater detail below.

In one embodiment, capstan 220 can be utilized to create, at least in part, the desired shape memory in wire 210 after it has been straightened by straightener 250. In this respect, the movement of wire about edge 282, based on the diameter of capstan roller edge 282, the diameter of the welding wire and other factors, can impart a desired shape memory into the wire. Further, capstan 220 can move relative to other components in apparatus 200 to form the desired sine configuration. This can include relative movement of axis 280 in one or many directions. In addition, the rotation speed or RPM of capstan can be varied to produce the sine configuration. And even further, the wire can be rotated relative to capstan 220 to produce a sine configuration. However, as is also discussed above, arrangement 200 merely represents one method of producing the desired shape memory of the present invention. Other techniques that do not utilize the capstan could be used to create the shape memory.

Once the cast wire leaves capstan 220 it is directed toward a spinning guide assembly 300 which includes a spinning guide 310 and a cylinder assembly 320. Guide assembly lays the wire in a desired pattern in the container including, but not limited to, laying the wire in a pattern designed to maximize the density of the wire in the container. Spinning guide 310 can also be used to, at least in part, create the desired shape memory in the wire.

In greater detail, cylinder assembly 320 is supported by a frame (not shown) that suspends the assembly above an excentrated rotating table 330 and a wire container 332 which will be discussed in greater detail below. Spinning guide assembly 300 further includes an outer cylindrical surface 340 that can include a guide channel 342 positioned about outer cylindrical surface 342. However, guide channel 340 does not need to be a surface mounted channel to work as described. The wire passes from capstan 220 through guide assembly 300 to layer wire 210 in a wire cavity 344 in a container 345 as a wire coil 346. As is shown, coil 346 is only partially formed.

As wire 210 passes through assembly 300, it travels through channel 342 and, at the same time, guide assembly 300 can be rotated about guide axis 350. This combination of the rotation about axis 350 and the engagement with channel 342 can be utilized to produce a desired wire coil pattern such as a pattern to maximize the package wire and can also be utilized to at least in part produce the desire sine like shape memory in the wire.

As is stated above, rotating table 330 is separate from assembly 300 and can move relative to assembly 300. In greater detail, container 345, which can be any welding wire container known in the art, is supported by table 330 and, therefore, can move relative to assembly 300. Table 330 includes a rotating top 360 attached to a motor 362 such that the motor can propel the top and thus container 345 about a container axis 366. The top is rotationally joined to a lift or elevator 368 which can move up and down or, in other words, axially along axis 366. The actions of rotating top 360 and lift 368 are both relative to assembly 300 and they have separate functions. Further, these components are generally known in the art and are, therefore, not described in detail herein.

The rotation of top 360 and container 345 work in connection with assembly 300 to wind the wire into cavity in a dense fashion. While discussed in greater detail in Cooper 6,019,303, which is incorporated by reference herein, the convolutions of wire have a loop diameter that is less than the diameter of container wall 370. Further, it is desires to have the majority of convolutions the same or similar diameters. Therefore, assembly 300 is positioned relative to table 330 such that axis 350 is spaced from axis 366. As a result, as wire 210 flows from channel 242, and assembly 300 makes a full rotation about axis 350, a convolution of wire 210 is produced off center of axis 350. In order to maximize the wire in cavity 344, top 360 is rotated which, in turn, rotates container 345, while another convolution of wire is positioned in the wire cavity. This process of rotating the container while the wire is passed through assembly, orients the convolutions in such a way that they, as a group, form a cylindrical wire coil extending from central opening 372 to wall 370.

As can be appreciated, as wire 210 is loaded into cavity 344, a top end 374 of coil 346 grows vertically in cavity 344. Accordingly, as the wire volume increases in cavity 344, top 360 is lowered at the same rate to maintain wire exit 380 at a generally constant spacing from coil top 374. As is shown, only a fraction of the wire has been positioned in cavity 344 and, therefore, wire exit 380 and coil top 374 are near the bottom of the container.

Again, the apparatuses shown in this application represent several embodiments of the invention of this application, however, they do not represent an exhaustive list of all methods of producing the desire shape memory of this application.

While considerable emphasis has been placed on the preferred embodiments of the invention illustrated and described herein, it will be appreciated that other embodiments and/or equivalents thereof can be made and that many changes can be made in the preferred embodiments without departing from the principals of the invention. Accordingly, it is to be distinctly understood that the foregoing descriptive matter is to be interpreted merely as illustrative of the invention and not as a limitation.

## Claims

1. A method of forming a large diameter weld wire for storage on a spool or in a container, said method comprising:
forming a weld wire having a diameter of about 0.079 inches or more and about 0.190 inches or less; and
imparting a desired shape memory on said weld wire, said shape memory substantially lying in a single plane wherein said shape memory is generally a repeating waveform having a wavelength and a height for each waveform cycle.

2. A method as defined in claim 1, wherein imparting said desired shape memory on said wire comprises imparting a sinusoidal waveform on said weld wire.

3. A method as defined in claim 1 or 2, wherein said waveform has a wavelength of about 2500 mm or more and about 3000 mm or less.

4. A method as defined in anyone of the claims 1 to 3, wherein said waveform has a mean height of about 10 mm or more and about 400 mm or less.

5. A method as defined in anyone of the claims 1 to 4, wherein said desired shape memory is imparted on said weld wire at least partially prior to said weld wire being wound on said spool.

6. A method as defined in anyone of the claims 1 to 4, wherein said desired shape memory is at least partially retained on said weld wire after said weld wire is unwound from said spool.

7. A method as defined in anyone of the claims 1 to 6, further comprising at least partially removing an initial shape memory on said weld wire resulting from said forming of said weld wire prior to imparting said desired shape memory on said weld wire.

8. A packaged supply of large diameter weld wire, comprising: a spool or container; and a length of welding wire wound on or in said spool or container, said welding wire having a desired shape memory substantially lying in a single plane when said weld wire is removed from said spool or container, wherein said shape memory is generally a repeating sinusoidal waveform having a wavelength and a height for each waveform cycle.

9. A packaged supply of large diameter weld wire as defined in claim 8, wherein said weld wire has a diameter of about 0.079 inches or more and about 0.190 inches or less.

10. A weld wire for storage on or in a spool or container of weld wire, said wire comprising a desired shape memory comprising a substantially sinusoidal repeating waveform having a wavelength and a height for each waveform cycle, said shape memory substantially lying in a single plane when said weld wire is removed from said spool or container.

11. A weld wire as defined in claim 10, wherein said weld wire has a diameter of about 0.079 inches or more and about 0.190 inches or less.

12. A weld wire as defined in claim 10 or 11, wherein said waveform has a wavelength of about 2500 mm or more and about 3000 mm or less.

13. A weld wire as defined in anyone of the claims 10 to 12, wherein said waveform has a mean height of about 10 mm or more and about 350 mm or less.

14. A weld wire as defined in claim 10, wherein said weld wire has a diameter of about 2 mm or more and about 4.0 mm or less.

15. A weld wire as defined in claim 14, wherein said weld wire is a submerged arc welding (SAW) wire.

16. A weld wire as defined in claim 10, wherein said weld wire is a solid wire comprising a solid electrode material.

17. A weld wire as defined in claim 10, wherein said weld wire is a cored wire comprising a metallic outer sheath surrounding an inner core.

18. A weld wire as defined in claim 10, wherein said weld wire has a diameter of about 0.070 inches or more.
